# EUROPEAN PATENT SPECIFICATION

(11) **EP 3 372 008 B1**
(45) Date of publication and mention of the grant of the patent: **11.01.2023**
(21) Application number: 16861699.3
(22) Date of filing: 27.10.2016
(51) Int. Cl.: H04L 45/00, H04L 47/30, H04L 47/34, H04W 28/08, H04W 80/02, H04W 84/12, H04W 28/12

(54) **FLOW CONTROL FEEDBACK FROM USER EQUIPMENT RECEIVING A SPLIT BEARER**
FLUSSSTEUERUNGSRÜCKMELDUNG VON BENUTZERGERÄT, DAS EINEN SPLIT-BEARER EMPFÄNGT
RETOUR D'INFORMATIONS DE COMMANDE DE FLUX EN PROVENANCE D'UN ÉQUIPEMENT D'UTILISATEUR RECEVANT UNE PORTEUSE PARTAGÉE

(30) Priority: 06.11.2015 US 201562251932 P
(43) Date of publication of application: 12.09.2018
(73) Proprietor: Nokia Technologies Oy, 02610 Espoo (FI)
(72) Inventor: KOSKINEN, Henri M., 02600 Espoo (FI); JANCZYK, Georg-Raffael, 86159 Augsburg (DE)
(74) Representative: Whiting, Gary
(86) International application number: PCT/IB2016/056490
(87) International publication number: WO 2017/077433

(56) References cited:
- WO-A1-2016/186697
- NOKIA NETWORKS: "Flow control for LWA", 3GPP DRAFT; R2-154258, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Malmo, Sweden; 20151005 - 20151009 4 October 2015 (2015-10-04), XP051004817, Retrieved from the Internet: URL:http://www.3gpp.org/ftp/Meetings_3GPP_ SYNC/RAN2/Docs/ [retrieved on 2015-10-04]
- INTEL CORPORATION ET AL: "UE status reporting for LWA", 3GPP DRAFT; R2-154394-UE-LWA-STATUS-REPORTING-V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Malmo, Sweden; 20151004 - 20151010 4 October 2015 (2015-10-04), XP051004970, Retrieved from the Internet: URL:http://www.3gpp.org/ftp/Meetings_3GPP_ SYNC/RAN2/Docs/ [retrieved on 2015-10-04]
- INTEL CORPORATION et al.: "UE status reporting for LWA;", 3GPP TSG-RAN2 Meeting #91-bis; R2-154394, 26 September 2015 (2015-09-26), XP051023876, Malmo, Sweden
- "On flow control feedback for LTE WLAN radio interworking/aggregation;", 3GPP TSG-RAN2 Meeting #91-bis; R2-154659, 26 September 2015 (2015-09-26), XP051042359, Malmo, Sweden
- "Technical Specification Group RAN; E-UTRA; Packet Data Convergence Protocol (PDCP) Specification (Release 12);", 3GPP TS 36.323 v12.4.0, 1 June 2015 (2015-06-01), pages 18-19, XP055541187,
- INTEL CORPORATION;: "Revised WID: LTE-WLAN Radio Level Integration and Interworking Enhancement;", 3GPP TSG-RAN Meeting #68; R2-151022, 15 June 2015 (2015-06-15), XP050985835, Malmo, Sweden
- NOKIA NETWORKS ;: "Flow control for LWA", 3GPP TSG-RAN2 Meeting #92; R2-156486, 16 November 2015 (2015-11-16), XP051005890, Anaheim, USA
- INTEL CORPORATION;: "Report on RAN2 email discussion: [91 bis#20][LTE/WiFi] UE feedback", 3GPP TSG-RAN2 Meeting #92; R2-156738, 7 November 2015 (2015-11-07), XP051042475, Anaheim, USA
- "Technical Specification Group RAN; E-UTRA; Packet Data Convergence Protocol (PDCP) Specification (Release 13)", 3GPP TS 36.323 v13.3.1, 1 September 2016 (2016-09-01), pages 24-25 , 31-32, 37, XP055541189,

## Description

### TECHNICAL FIELD:

The teachings in accordance with the exemplary embodiments of this invention relate generally to flow-control for split-bearer operation and, more specifically, relate to flow-control feedback from a user equipment receiving a bearer split between a mobile-radio access network and a wireless local area network.

### BACKGROUND:

This section is intended to provide a background or context to the example embodiments of the invention as disclosed herein. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Certain abbreviations that may be found in the description and/or in the Figures are herewith defined as follows:
- AP: access point
- CN: core network
- DC: dual connectivity
- DL: downlink
- DRB: data radio bearer
- DSP: digital signal processor
- E-UTRAN: evolved universal terrestrial radio access network
- eNB: base station
- E-RAB E-UTRAN: Radio Access Bearer
- FMS: first missing segment
- HCW: highest count over WLAN
- HFN: hyper frame number
- LTE: long term evolution
- LSB: least significant bit
- LWA: LTE/WLAN aggregation
- MAC: medium access control
- MCS: modulation coding scheme
- MeNB: master eNB
- MGC: master cell group
- PDCP: packet data convergence protocol
- PDU: protocol data unit
- RAN: radio access network
- RF: radio frequency
- RRC: radio resource control
- SDU: service data unit
- SeNE: secondary eNB
- SN: sequence number
- UE: User Equipment
- WLAN: wireless local area network
- WT: WLAN termination

In data networks, packets of a data stream may reach their destination via multiple paths. A Dual Connectivity operation mode is introduced in 3GPP release 12. A routing function at a "splitting point" has to decide which packets shall take which path. E-UTRAN supporting Dual Connectivity (DC) operation provides an example of such a network.

The document "Flow Control for LWA" (3GPP draft, R2-154258, 3GPP TSG-RAN WG2 Meeting, Malmo, Sweden 5-9 October 2015) describes a network based flow control for WLAN aggregation and a complementary UE based flow control.

### SUMMARY:

This section contains examples of possible implementations and is not meant to be limiting.

In an example aspect of the invention there is an apparatus according to claim 1. In another example aspect of the invention there is a method according to claim 7.

In another example aspect of the invention, there is a computer program according to claim 13.

### BRIEF DESCRIPTION OF THE DRAWINGS:

The foregoing and other aspects of embodiments of this invention are made more evident in the following Detailed Description, when read in conjunction with the attached Drawing Figures, wherein:
Figure 1 shows an example of overall architecture of an E-UTRAN system;
Figure 2 shows a diagram illustrating an example of a User Equipment (UE) in partially overlapping cells;
Figure 3 shows a diagram illustrating some components of the wireless system shown in Figures 1 and 2;
Figure 4 shows an LTE/WLAN aggregation radio protocol architecture for a non-collocated scenario;
Figure 5 shows a Count value format that may be used in accordance with the example embodiments of the application; and
Figure 6 is a block diagram illustrating a method in accordance with an example embodiment of the application.

### DETAILED DESCRIPTION:

In this application, we propose a method of flow-control feedback from a user equipment receiving a bearer split between a mobile-radio access network and a wireless local area network.

More particularly, the example embodiments of the application relate to flow control for LTE-WLAN split-bearer operation. Some selected clarifying excerpts are discussed below.

The example embodiments of the application relate to a 3GPP LTE Rel-13 work item LTE-WLAN Radio Level Integration (LTE_WLAN_radio-Core, leading WG: RAN2, started: Mar. 15, target: Dec. 15, WID: RP-151022).

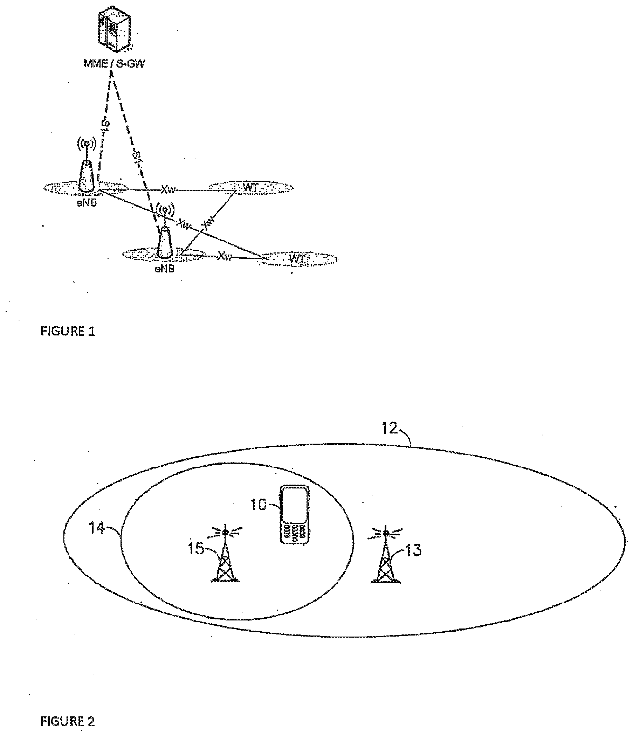

Figure 1 shows an example of overall architecture of an E-UTRAN system. Figure 1 illustrates an overall architecture for the LWA non-collocated scenario and LWA in an E-UTRAN system. As shown in Figure 1, the Xw interface is defined between an eNB and the WLAN termination (WT) point, and the WT point terminates the Xw interface. Thus, the eNBs are connected to WT points via the Xw interface, and the eNBs connect to the MME/S-GW (e.g., core network) via the S1 interface.

E-UTRAN supports LTE/WLAN aggregation (LWA) operation whereby a UE in RRC_CONNECTED is configured by the eNB to utilize radio resources of LTE and WLAN. For example in LTE networks, generally coverage is ubiquitous whereas a deployment of Wi-Fi may be using hotspots. An LTE connection is maintained when a user equipment moves in and out of a Wi-Fi hotspot coverage area. As this happens the disconnection and reconnection of a Wi-Fi connection may be transparent to the user equipment.

PDCP-level aggregation may be supported with legacy Wi-Fi Access Points (Aps) together with non-collocated LTE eNBs provided a link exists between them for an Access Point (AP) to report information such as loading and a modulation coding scheme (MCS) to an eNB for example.

The E-UTRAN system includes eNBs, providing an E-UTRAN user plane (PDCP/RLC/MAC/PHY) and control plane (RRC) protocol terminations towards the UE (not shown in Figure 1). The eNBs are interconnected with each other by means of an X2 interface. The eNBs are also connected by means of a S1 interface to an EPC (Enhanced Packet Core), such as to a MME (Mobility Management Entity) by means of a S 1 MME interface and to a Serving Gateway (S-GW) by means of a S1 interface. The S1 interface supports a many-to-many relationship between MMEs/S-GW and eNBs.

Referring also to Figure 2, a user equipment (UE 10) may be connected to more than one cell at a same time. In this example the UE 10 is connected to a first cell 12 having a base station 13 (such as an eNB for example) and a second cell 14 having a base station 15 (such as an eNB or WiFi Access Point for example). The two cells 12, 14 are, thus, at least partially overlapping. In one type of example embodiment, the first cell may operate on a licensed band and the second one may operate on an unlicensed band. For simplicity, there are just two cells depicted in the scenario shown in Figure 2. In other alternate examples any number of cells operating on licensed and/or unlicensed band(s) may be provided to work together for a suitable Carrier Aggregation (CA).

In general, the various embodiments of the UE 10 can include, but are not limited to, cellular telephones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

In data networks, packets of a data stream may reach their destination via multiple paths. A routing function at a "splitting point" has to decide which packets shall take which path. Features as described herein may use a method which can be used by the splitting point in order to decide how the data stream shall be split. An algorithm may be provided which has the aim to ensure that a receiver at the destination can deliver "reordered data" as fast as possible to an application using the data. E-UTRAN supporting Dual Connectivity (DC) operation provides an example of such a network: A multiple RX/TX UE in RRC_CONNECTED is configured to utilize radio resources provided by two distinct schedulers, located in two eNBs connected via a non-ideal backhaul over the X2 interface (see for example 3GPP TR 36.300).

For the transport of user plane data from the S-GW to the UE so-called "split bearers" may be used. Split bearers provide two paths for downlink user plane data. They can either be sent from the S-GW via a "Master eNB (MeNB)" to the UE, or they can be sent from the S-GW via the MeNB to a Secondary eNB (SeNB) which finally sends them to the UE. For a "split bearer" the Master eNB (MeNB) is U-plane connected to the S-GW via S1-U and in addition, the MeNB is interconnected to a Secondary eNB (SeNB) via X2-U. The routing function in the PDCP layer of the MeNB decides whether a PDCP layer PDU of a split bearer is sent directly over the local air interface to the UE or whether it is forwarded to the SeNB via X2-U. A PDCP layer reordering function in the UE receives PDUs from the MeNB and from the SeNB, reorders them and forwards them to the application running on the UE 10. The features described herein may be used for flow control information to perform flow control functions applied over LTE-WLAN split-bearer operation.

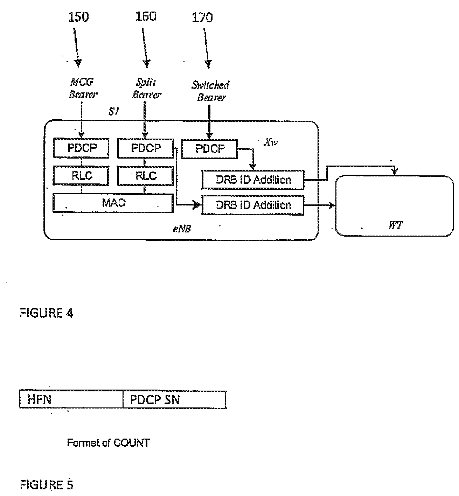

In accordance with the example embodiments of the application:
**A split bearer** refers to an ability to split a bearer over multiple base stations. A radio protocol configuration for a split bearer operation is also discussed below with regards to Figure 4. Such a split bearer or dual connectivity occurs when a user equipment (UE) uses radio resources provided by at least two different access nodes (e.g., Master and Secondary base stations) when connected for example by an Xw or backhaul while in an RRC_CONNECTED mode;
**Master Cell Group:** the group of the serving cells associated with the MeNB;
**Master eNB:** in dual connectivity, the eNB which terminates at least S1-MME and therefore act as mobility anchor towards the CN;
**Secondary Cell Group:** the group of the serving cells associated with the SeNB;
**Secondary eNB:** in dual connectivity, an eNB providing additional radio resources for the UE, which is not the Master eNB; and
**X(n):** interface between MeNB and SeNB; or MeNB and/or SeNB to a WLAN termination (WT) point. Xn in this application refers to an Xw type interface.

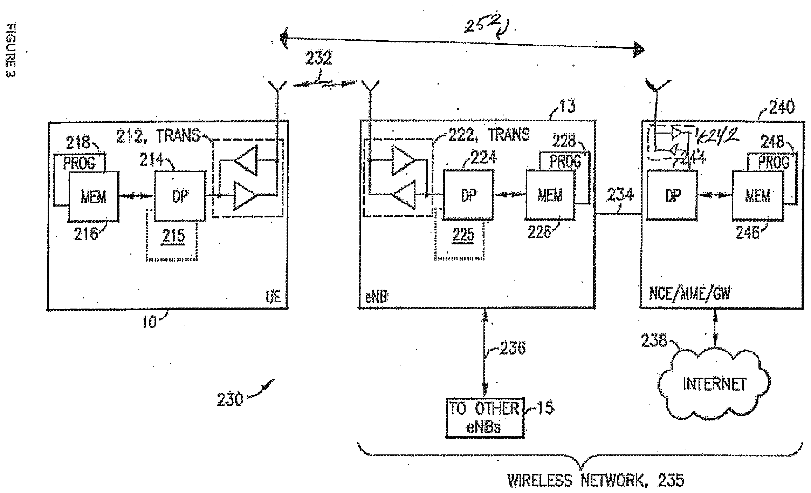

Before describing the exemplary embodiments of the application in further detail reference is now made to Figure 3. Figure 3 illustrates a simplified block diagram illustrating some components of the wireless system shown in Figures 1 and 2. Referring also to Figure 3, in the wireless system 230 a wireless network 235 is adapted for communication over a wireless link 232 with an apparatus, such as a mobile communication device which may be referred to as a UE 10, via a network access node, such as a Node B (base station), and more specifically an eNB 13 such as shown in Figure 2. The network 235 may include a network control element (NCE) 240 that may include MME/S-GW functionality, and which provides connectivity with a network, such as a telephone network and/or a data communications network (e.g., the internet 238). The NCE 240 may include a WLAN access point as in accordance with an example embodiment of the invention.

The UE 10 includes a controller, such as a computer or a data processor (DP) 214, a computer-readable memory medium embodied as a memory (MEM) 216 that stores a program of computer instructions (PROG) 218, and a suitable wireless interface, such as radio frequency (RF) transceiver 212, for bidirectional wireless communications with the eNB 13 and possibly the NCE 240 via one or more antennas using the data paths 232 and 252, respectively. The PROG 218 can include computer instructions that, when executed by a processor, such as the DP 214, operates in accordance with the example embodiments of the application.

The eNB 13 also includes a controller, such as a computer or a data processor (DP) 224, a computer-readable memory medium embodied as a memory (MEM) 226 that stores a program of computer instructions (PROG) 228, and a suitable wireless interface, such as RF transceiver 222, for communication with the UE 10 via one or more antennas. The eNB 13 is coupled via a data/control path 234 to the NCE 240. The path 234 may be implemented as an interface, such as an S1 interface. The eNB 13 may also be coupled to another eNB via data/control path 236, which may be implemented as an interface.

The NCE 240 includes a controller, such as a computer or a data processor (DP) 244, a computer-readable memory medium embodied as a memory (MEM) 246 that stores a program of computer instructions (PROG) 248 and possibly a suitable wireless interface, such as radio frequency (RF) transceiver 242, for bidirectional wireless communications with the UE 10 and the eNB 13 via path 234 and/or one or more antennas using the data path 252.

At least one of the PROGs 218, 228 and 248 is assumed to include program instructions that, when executed by the associated DP, enable the device to operate in accordance with exemplary embodiments of this application, as will be discussed below in greater detail. That is, various exemplary embodiments of this application may be implemented at least in part by computer software executable by the DP 214 of the UE 10; by the DP 224 of the eNB 13; and/or by the DP 244 of the NCE 240, or by hardware, or by a combination of software and hardware (and firmware). Base station 15 may have the same type of components as the other base station(s) 13.

For the purposes of describing various exemplary embodiments in accordance with this application the UE 10 and the eNB 13 may also include dedicated processors, for example Control module 215 and a corresponding Control module 225. Control module 215 and Control module 225 may be constructed so as to operate to perform at least the flow control feedback operations as in accordance with various exemplary embodiments in accordance with this application. In accordance with an example embodiment of the application at least the Control modules 215 and 225 are configurable to perform at least the flow control feedback operations using in-band signaling (e.g., PDCP).

The computer readable MEMs 216, 226 and 246 may be of any type suitable to the local technical environment and may be implemented using any suitable data storage technology, such as semiconductor based memory devices, flash memory, magnetic memory devices and systems, optical memory devices and systems, fixed memory and removable memory. The DPs 214, 224 and 244 may be of any type suitable to the local technical environment, and may include one or more of general purpose computers, special purpose computers, microprocessors, digital signal processors (DSPs) and processors based on a multicore processor architecture, as non-limiting examples. The wireless interfaces (e.g., RF transceivers 212 and 222) may be of any type suitable to the local technical environment and may be implemented using any suitable communication technology such as individual transmitters, receivers, transceivers or a combination of such components.

Figure 4 illustrates an LTE/WLAN aggregation (LWA) Radio Protocol Architecture for the Non-Collocated Scenario. As shown in Figure 4 there is S1 interfaces for MCG bearer 150, split bearer 160, and switched bearer 170 data transport. The LWA supports split bearer operation on downlink in which a bearer is configured to use both eNB and WLAN resources. In LWA, the UE may be configured with multiple bearers utilizing WLAN. The PDCP layers in the eNB store DL SDUs of a split bearer in a bearer specific first in first out queue. The Xw-U-interface standard supports the flow control function based on feedback from the WT. It is noted that in accordance with an example embodiment of the application feedback can alternately be provided by the UE. The Flow Control function is applied when an E-RAB is configured to use WLAN and only for DL i.e. the flow control information is provided by the WT and/or UE to the eNB for the eNB to control the downlink user data flow to the WT and to avoid that more than half the PDCP sequence number space is used at any one time. An E-RAB can uniquely identify the concatenation of an S1 Bearer and the corresponding Data Radio Bearer. When an E-RAB exists, there is a one-to-one mapping between this E-RAB and an EPS bearer of the Non Access Stratum.

In accordance with an example embodiment of the invention there is UE based flow control. Before discussing the example embodiments in more detail it is noted that network based flow control as discussed above may be used as a baseline for flow control reporting in accordance with the example embodiments. However, for at least situations where network based flow control is not feasible, such as due to limitations of WLAN APs that are connected to the WT, the example embodiments of the application provide an additional UE based fallback solution whose usage may be configurable by the eNB. In accordance with the example embodiments of the invention there is a method where the eNB may configure UE to send flow-control feedback at a PDCP level.

As similarly stated above, earlier proposed flow control can be based on that the flow control information is provided by the WT to the eNB for the eNB to control the downlink user data flow to the WT and to avoid that more than half the PDCP sequence number space is brought in flight. LTE-internal split bearers were introduced already in Rel-12 dual connectivity: see e.g. TS 36.300. For such split bearers, network-internal flow-control feedback has been introduced as discussed below.

At least for LTE-internal split-bearer operation, the purpose of the X2-U Downlink data delivery status procedure is to provide feedback from the SeNB to the MeNB to allow the MeNB to control the downlink user data flow via the SeNB for the respective E-RAB. When the SeNB decides to trigger the Feedback for Downlink Data Delivery procedure it shall report:
a) the highest PDCP PDU sequence number successfully delivered in sequence to the UE among those PDCP PDUs received from the MeNB;
b) the desired buffer size in bytes for the concerned E-RAB;
c) the minimum desired buffer size in bytes for the UE; and
d) the X2-U packets that were declared as being "lost" by the SeNB and have not yet been reported to the MeNB within the DL DATA DELIVERY STATUS frame.

Here, the indication or information d) of lost packets was deemed valuable to the eNB terminating the PDCP of the split bearer, because in a possible implementation, the eNB may retransmit PDCP PDUs discovered to have gone missing in transfer via the SeNB (or in the context of this invention, via the WLAN). In the WLAN context, information of packet losses over WLAN may also serve as a prompt indication of problems on the UE's WLAN link.

To realize UE-provided flow-control feedback for LTE-WLAN split bearers, a most obvious solution already mentioned in 3GPP would be to have the UE regularly send the kind of PDCP Status reports that are already defined in the PDCP specification:
*To compile a status report, as indicated below, and submit it to lower layers as the first PDCP PDU for the transmission, by:*
- *setting the FMS field to the PDCP SN of the first missing PDCP SDU;*
- *if there is at least one out-of-sequence PDCP SDU stored, allocating a Bitmap field of length in bits equal to the number of PDCP SNs from and not including the first missing PDCP SDU up to and including the last out-of-sequence PDCP SDUs, rounded up to the next multiple of 8;*
- *setting as '0' in the corresponding position in the bitmap field for all PDCP SDUs that have not been received as indicated by lower layers, and optionally PDCP SDUs for which decompression have failed;*
- *indicating in the bitmap field as '1' for all other PDCP SDUs.*

A problem with this solution is the potentially large overhead caused. Whereas the currently specified PDCP Status reporting is only done at distinct RRC-invoked PDCP procedures typically associated with certain serving-cell changes for the UE, for well-working split-bearer flow control the feedback would need to be provided at a rate of over 20 times per second: see simulation results below. For instance, with a 15-bit long PDCP SN, the bitmap in the currently defined PDCP Status report can be up to 16kbit long, which sent 20 times per second consumes a bit rate of 320kbps - for the flow-control feedback of one LTE-WLAN split bearer alone.

In addition to this, it has been considered to extend a PDCP SN to 23 bits, in which case the bitmap in a single PDCP Status report can be up to 4Mbit long.

The example embodiments of the application seek to provide at least a method and apparatus to provide PDCP-level flow-control reporting from the UE which may include at least some or all of properties as discussed below. The example embodiments of the application address how such UE-based flow-control feedback should be arranged.

In accordance with the example embodiments of the application, contents of the PDCP-level flow-control report can include one or more of:
- A First Missing Segment, or FMS
   o More precisely - taking into account that the PDCP reordering-algorithm may ignore missing PDUs after certain time: the SN following that of the highestnumbered PDU already delivered to upper layers;
   o This allows the PDCP transmitter at the eNB to control its transmission window;
- An indication or information of the highest one of the Count values of PDCP PDUs received over WLAN (henceforth abbreviated HCW). In accordance with example embodiments of the application the highest count value may be based on a period of time and/or a received series of PDCP PDUs,
   o This provides the eNB with information on WLAN-transmission progress,
   o NOTE: by the IEEE 802.11 MAC specification, *"The recipient shall pass MSDUs and A-MSDUs up to the next MAC process in order of increasing sequence number",* i.e. WLAN MAC delivers to upper layers received packets in the order in which they have been submitted for transmission at the peer MAC entity;
- An indication or information of the Count values of PDUs not received so far, limited to Count values falling within a range of Count values whose upper end is at HCW, or whose upper end is at least based in part on HCW (if, for example, this indication may be a bitmap whose length is rounded up to be an integer multiple of, for example, an octet of bits)
   o This provides the eNB with information on PDUs lost over the WLAN branch (only indicative though, because out-of-order delivery over the Xw interface, while rare, is possible);
- To limit the size of each report, in a given report sent, the lower end of the above Count-value range is based on either at the Count value corresponding to FMS, or based at least in part on an upper end of a Count-value range that the most recent previously sent report was limited to, whichever positions the lower end of the Count-value range at the higher value,
   o The upper end of this Count-value range covered in the most recent previously sent report would be stored in a newly introduced PDCP state variable,
   o Starting the range where the previously reported range ended is based on an assumption of reliable delivery of the regular PDCP status reports by the lower layers, which is typically true if carried over RLC Acknowledged Mode (AM); if carried over RLC Unacknowledged Mode (or WLAN, which would be against the current RAN2 working assumptions that all uplink of an LTE-WLAN split bearer goes over the LTE radio) instead, such an option may not be a good choice,
      ▪ Even in case of delivery over RLC AM, the transmission of a report may remain unsuccessful even after the network-configured maximum number of RLC retransmissions. This results in the UE declaring Radio-Link Failure to the eNB and, typically, RRC Connection Re-establishment involving PDCP Re-establishment also for this split bearer. Considering the possibility of these events, it is proposed that at PDCP Re-establishment, the newly introduced PDCP state variable storing the upper end of the previously covered Count-value range is reset, e.g. to a value 0, or to have a value corresponding to FMS at that time.

Further, in accordance with the example embodiments of the application, triggers for sending the report can include:
- Since the most recent previously sent report, a network-configured amount of increase in:
   ∘ the number of Count values progressed by HCW ,
      ▪ This is especially useful for keeping the size of individual reports small;
   ∘ the number of Count values progressed by FMS,
      ▪ This is especially useful for frequent updates to the PDCP transmitter at the eNB for transmission-window control; and/or
   ∘ the number of PDCP PDUs received over WLAN,
      ▪ This is especially useful for frequent updates to the PDCP transmitter at the eNB for controlling the amount of data sent via WLAN;
- When, for that bearer, a received PDCP SDU is delivered to upper layers and no received SDUs remain stored at PDCP,
   o To avoid excessively frequent reporting from this trigger, it may need to be combined with a status-prohibit timer,
   o This could help to cleanly terminate a data burst on that bearer in the flow control;
- A possible local-NACK indication from the local, receiving WLAN MAC (whenever a gap is observed in the sequence numbers of SDUs that is delivered to upper layers),

If a bitmap is used to report the missing PDUs, it may be padded to be octetaligned. As one possible option, this padding would be done at the end of the lowest Count values, i.e. below max {FMS, Last_HCW}, with values indicating successfully received PDUs.

The reporting format proposed in this invention, while keeping overhead tolerable, would enable the eNB to determine failures of packets transmitted over Wi-Fi, the WLAN-branch throughput and the amount of data queued for the bearer in WLAN, allowing an efficient flow control when feedback from WLAN is not available. As eNB knows the sizes of the PDCP PDUs sent via WLAN, it can easily calculate the throughput over Wi-Fi air interface adding up the sizes of acknowledged packets and dividing it by the time elapsed from the last status report. The amount of data queued in WLAN for one bearer is easily calculated as the difference between the cumulated size of packets already sent over Wi-Fi and the cumulated size of acknowledged packets.

It is noted that the least significant bits (LSBs) of a COUNT can be the SN. Reference can be made to the following pre-existing PDCP-spec texts as disclosed in 3GPP TS 36.323 V14.0.1 (2016-09): 6.3.9 FMS
Length: 12 bits when a 12 bit SN length is used, 15 bits when a 15 bit SN length is used, and 18 bits when an 18 bit SN length is used PDCP SN of the first missing PDCP SDU.

Figure 5 shows a Count value format that may be used in accordance with the example embodiments of the invention. As shown in Figure 5 the Count value has a hyper frame number (HFN) and a PDCP sequence number. For ciphering and integrity the COUNT value is composed of a HFN and a PDCP SN that is maintained. In the example embodiments of the application, any single PDCP SDU is associated with one Count value, and any single PDCP PDU is identified by one PDCP SN in its header fields, from which the Count value is determined at reception. The length of the PDCP SN is configured by upper layers. In accordance with an example embodiment of the application, there is a comparison of values related to the Count value by a network device, such as the UE 10 of Figure 3. The UE takes into account that the Count which may be a 32-bit value, may wrap around (e.g., Count value of 2³² - 1 is less than Count value of 0). Also the size of the HFN part in bits may be equal to 32 bits minus the length of the PDCP SN. Further, it is noted that one or more WLAN legs may be considered, assuming that another network device, such as the eNB 13 of Figure 3, knows which PDUs were sent over each particular one of one or more WLAN bearer branch. The example embodiments of the application provide reporting of a separate HCW value per leg, and the range to which the reported missing PDUs are limited could end at the maximum of those. Further, in accordance with the example embodiments the triggers, as discussed above, can be configured to be specific to one or more branches.

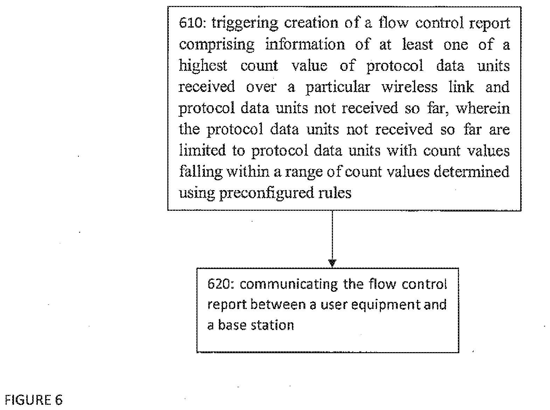

Figure 6 illustrates operations which may be performed by a network device such as, but not limited to, a UE 10 as shown in Figure 3. As shown in step 610 of Figure 6, there is triggering creation of a flow control report comprising information of at least one a highest count value of protocol data units received over a particular wireless link and protocol data units not received so far, wherein the protocol data units indicated as not received so far are limited to protocol data units with count values falling within a range of count values determined using preconfigured rules. At step 620 of Figure 6 there is communicating the flow control report between a user equipment and a base station.

In accordance with the example embodiments of the application as described in the paragraphs above, in a given report sent, an upper end of the range of count values is based on a highest count value of protocol data units received over a particular wireless link.

In accordance with the example embodiments of the application as described in the paragraphs above, in a given report sent, a lower end of the range of count values is based on at least one of a count value of a first missing protocol data unit and an upper end of a count-value range that the most recent previously sent report was limited to.

In accordance with the example embodiments of the application as described in the paragraph above, the upper end of the count-value range covered in the most recent previously sent report is stored as a packet data convergence protocol state variable.

In accordance with the example embodiments of the application as described in the paragraphs above, the triggering the creation of the flow control report is based on an increase in at least one of a highest count value of a protocol data unit received over a particular wireless link, a value of a first missing segment, and a number of protocol data units received over the particular wireless link since a most previous flow control report.

In accordance with the example embodiments of the application as described in the paragraphs above, the triggering the creation of the flow control report is based on a received packet data convergence protocol service data unit delivered to upper layers when no received service data units remain stored.

In accordance with the example embodiments of the invention as described in the paragraphs above, there is a status-prohibit timer, wherein the flow control report can be sent after an expiration of the timer.

In accordance with an exemplary embodiment of the application as described above there is an apparatus comprising: means for triggering creation of a flow control report comprising information of at least one of a highest count value of protocol data units received over a particular wireless link and protocol data units not received so far, wherein the protocol data units indicated as not received so far are limited to protocol data units with count values falling within a range of count values determined using preconfigured rules [UE 10 of Figure 3]. Further, there is means for communicating the flow control report between a user equipment and a base station [transceiver 212 and wireless link 232 of Figure 3].

In the exemplary aspect of the invention according to the paragraph above, wherein the means for triggering and communicating comprises a memory [MEM 216, 226, and/or 246] encoded with a computer program [PROG 218, 228, and/or 248]; and/or executable by at least one processor [DP 215, 225, and 244].

The apparatus may be, include or be associated with at least one software application, module, unit or entity configured as arithmetic operation, or as a computer program or portions thereof (including an added or updated software routine), executed by at least one operation processor, unit or module. Computer programs, also called program products or simply programs, including software routines, applets and/or macros, may be stored in any apparatusreadable data storage medium. A computer program product may comprise one or more computerexecutable components which, when the program is run, are configured to carry out embodiments described above by means of Figure 3. Additionally, software routines may be downloaded into the apparatus.

The apparatus, such as a node or user device, or a corresponding component, may be configured as a computer or a microprocessor, such as single-chip computer element, or as a chipset, including or being coupled to a memory for providing storage capacity used for software or arithmetic operation(s) and at least one operation processor for executing the software or arithmetic operation(s).

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the application may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the preferred embodiments of this invention could be used to advantage without the corresponding use of other features. As such, the foregoing description should be considered as merely illustrative of the principles of the invention, and not in limitation thereof.

## Claims

1. An apparatus, comprising:
means for triggering a creation of a flow control report comprising: information of a highest count value of protocol data units received over a particular wireless link; and **information of** protocol data units not received so far, wherein the protocol data units not received so far are limited to protocol data units with count values falling within a range of count values determined using preconfigured rules, and wherein in the flow control report, an upper end of the range of count values is based on the highest count value of the protocol data units received over the particular wireless link; and
means for communicating the flow control report from a user equipment to a base station.

2. The apparatus of claim 1, wherein in the flow control report a lower end of the range of count values is based on at least one of a count value of a first missing protocol data unit and an upper end of a count-value range that a most recent previously sent flow control report was limited to.

3. The apparatus of claim 2, wherein an upper end of the count-value range covered in the most recent previously sent flow control report is stored as a packet data convergence protocol state variable.

4. The apparatus of any of claims 1 to 3, wherein the triggering the creation of the flow control report is based on an increase in at least one of the highest count value of the protocol data units received over the particular wireless link, a value of a first missing segment, and the number of protocol data units received over the particular wireless link since a most recent previously sent flow control report.

5. The apparatus of any of claims 1 to 3, wherein the triggering the creation of the flow control report is based on a received packet data convergence protocol service data unit delivered to upper layers when no received service data units remain stored.

6. The apparatus of any of claims 1 to 5, wherein communicating the flow control report is after an expiration of a status-prohibit timer.

7. A method comprising:
triggering a creation of a flow control report comprising: information of a highest count value of protocol data units received over a particular wireless link; and information of protocol data units not received so far, wherein the protocol data units not received so far are limited to protocol data units with count values falling within a range of count values determined using preconfigured rules, and wherein in the flow control report, an upper end of the range of count values is based on the highest count value of the protocol data units received over the particular wireless link; and
communicating the flow control report from a user equipment to a base station.

8. The method of claim 7, wherein in the flow control report a lower end of the range of count values is based on at least one of a count value of a first missing protocol data unit and an upper end of a count-value range that a most recent previously sent flow control report was limited to.

9. The method of claim 8, wherein an upper end of the count-value range covered in the most recent previously sent flow control report is stored as a packet data convergence protocol state variable.

10. The method of any of claims 7 to 9, wherein the triggering the creation of the flow control report is based on an increase in at least one of the highest count value of the protocol data units received over the particular wireless link, a value of a first missing segment, and the number of protocol data units received over the particular wireless link since a most recent previously sent flow control report.

11. The method of any of claims 7 to 9, wherein the triggering the creation of the flow control report is based on a received packet data convergence protocol service data unit delivered to upper layers when no received service data units remain stored.

12. The method of any of claims 7 to 11, wherein communicating the flow control report is after an expiration of a status-prohibit timer.

13. A computer program comprising instructions for causing an apparatus to perform at least the following:
triggering a creation of a flow control report comprising: information of a highest count value of protocol data units received over a particular wireless link; and information of protocol data units not received so far, wherein the protocol data units not received so far are limited to protocol data units with count values falling within a range of count values determined using preconfigured rules, and wherein in the flow control report, an upper end of the range of count values is based on the highest count value of the protocol data units received over the particular wireless link; and
communicating the flow control report from a user equipment to a base station.

14. The computer program of claim 13, further comprising instructions for causing the apparatus to perform the method of any one of claims 8 to 12.

## Patentansprüche

1. Vorrichtung, die Folgendes umfasst:
Mittel zum Auslösen einer Erstellung eines Flusssteuerberichts, der Folgendes umfasst:
Informationen eines höchsten Zählwertes von Protokolldateneinheiten, die über eine bestimmte drahtlose Verbindung empfangen werden; und
Informationen von Protokolldateneinheiten, die bislang noch nicht empfangen wurden, wobei die bislang noch nicht empfangenen Protokolldateneinheiten auf Protokolldateneinheiten mit Zählwerten, die innerhalb eines Bereichs von Zählwerten liegen, der unter Verwendung von vorausgelegten Regeln bestimmt wird, beschränkt sind, und
wobei im Flusssteuerbericht ein oberes Ende des Bereichs von Zählwerten auf dem höchsten Zählwert von über die bestimmte drahtlose Verbindung empfangenen Protokolldateneinheiten basiert; und
Mittel zum Kommunizieren des Flusssteuerberichts von einer Teilnehmereinrichtung zu einer Basisstation.

2. Vorrichtung nach Anspruch 1, wobei im Flusssteuerbericht ein unteres Ende des Bereichs von Zählwerten auf mindestens einem von einem Zählwert einer ersten fehlenden Protokolldateneinheit und einem oberen Ende eines Zählwertbereichs, auf den ein letzter zuvor gesendeter Flusssteuerbericht beschränkt war, basiert.

3. Vorrichtung nach Anspruch 2, wobei ein oberes Ende des Zählwertbereichs, der im letzten zuvor gesendeten Flusssteuerbericht angegeben ist, als eine Paketdatenkonvergenzprotokollzustandsvariable gespeichert wird.

4. Vorrichtung nach einem der Ansprüche 1 bis 3, wobei das Auslösen der Erstellung des Flusssteuerberichts auf einer Erhöhung von mindestens einem des höchsten Zählwerts der über die bestimmte drahtlose Verbindung empfangenen Protokolldateneinheiten, einem Wert eines ersten fehlenden Segments und der Anzahl von Protokolldateneinheiten, die seit einem letzten zuvor gesendeten Flusssteuerbericht empfangen wurden, basiert.

5. Vorrichtung nach einem der Ansprüche 1 bis 3, wobei das Auslösen der Erstellung des Flusssteuerberichts auf einer empfangenen Paketdatenkonvergenzprotokolldienstdateneinheit, die an obere Schichten geliefert wird, basiert, wenn keine empfangenen Dienstdateneinheiten mehr gespeichert sind.

6. Vorrichtung nach einem der Ansprüche 1 bis 5, wobei das Kommunizieren des Flusssteuerberichts nach einem Ablauf eines Statusunterbindungstimers erfolgt.

7. Verfahren, das Folgendes umfasst:
Auslösen einer Erstellung eines Flusssteuerberichts, der Folgendes umfasst:
Informationen eines höchsten Zählwertes von Protokolldateneinheiten, die über eine bestimmte drahtlose Verbindung empfangen werden; und
Informationen von Protokolldateneinheiten, die bislang noch nicht empfangen wurden, wobei die bislang noch nicht empfangenen Protokolldateneinheiten auf Protokolldateneinheiten mit Zählwerten, die innerhalb eines Bereichs von Zählwerten liegen, der unter Verwendung von vorausgelegten Regeln bestimmt wird, beschränkt sind, und
wobei im Flusssteuerbericht ein oberes Ende des Bereichs von Zählwerten auf dem höchsten Zählwert von über die bestimmte drahtlose Verbindung empfangenen Protokolldateneinheiten basiert; und
Kommunizieren des Flusssteuerberichts von einer Teilnehmereinrichtung zu einer Basisstation.

8. Verfahren nach Anspruch 7, wobei im Flusssteuerbericht ein unteres Ende des Bereichs von Zählwerten auf mindestens einem von einem Zählwert einer ersten fehlenden Protokolldateneinheit und einem oberen Ende eines Zählwertbereichs, auf den ein letzter zuvor gesendeter Flusssteuerbericht beschränkt war, basiert.

9. Verfahren nach Anspruch 8, wobei ein oberes Ende des Zählwertbereichs, der im letzten zuvor gesendeten Flusssteuerbericht angegeben ist, als eine Paketdatenkonvergenzprotokollzustandsvariable gespeichert wird.

10. Verfahren nach einem der Ansprüche 7 bis 9, wobei das Auslösen der Erstellung des Flusssteuerberichts auf einer Erhöhung von mindestens einem des höchsten Zählwerts der über die bestimmte drahtlose Verbindung empfangenen Protokolldateneinheiten, einem Wert eines ersten fehlenden Segments und der Anzahl von Protokolldateneinheiten, die seit einem letzten zuvor gesendeten Flusssteuerbericht empfangen wurden, basiert.

11. Verfahren nach einem der Ansprüche 7 bis 9, wobei das Auslösen der Erstellung des Flusssteuerberichts auf einer empfangenen Paketdatenkonvergenzprotokolldienstdateneinheit, die an obere Schichten geliefert wird, wenn keine empfangenen Dienstdateneinheiten mehr gespeichert sind, basiert.

12. Verfahren nach einem der Ansprüche 7 bis 11, wobei das Kommunizieren des Flusssteuerberichts nach einem Ablauf eines Statusunterbindungstimers erfolgt.

13. Computerprogramm, das Anweisungen zum Veranlassen einer Vorrichtung, mindestens Folgendes durchzuführen, umfasst:
Auslösen einer Erstellung eines Flusssteuerberichts, der Folgendes umfasst:
Informationen eines höchsten Zählwertes von Protokolldateneinheiten, die über eine bestimmte drahtlose Verbindung empfangen werden; und
Informationen von Protokolldateneinheiten, die bislang noch nicht empfangen wurden, wobei die bislang noch nicht empfangenen Protokolldateneinheiten auf Protokolldateneinheiten mit Zählwerten, die innerhalb eines Bereichs von Zählwerten liegen, der unter Verwendung von vorausgelegten Regeln bestimmt wird, beschränkt sind, und
wobei im Flusssteuerbericht ein oberes Ende des Bereichs von Zählwerten auf dem höchsten Zählwert von über die bestimmte drahtlose Verbindung empfangenen Protokolldateneinheiten basiert; und
Kommunizieren des Flusssteuerberichts von einer Teilnehmereinrichtung zu einer Basisstation.

14. Computerprogramm nach Anspruch 13, das ferner Anweisungen zum Veranlassen der Vorrichtung, das Verfahren nach einem der Ansprüche 8 bis 12 durchzuführen, umfasst.

## Revendications

1. Appareil, comprenant :
des moyens pour déclencher la création d'un rapport de commande de flux comprenant :
des informations d'une valeur de comptage la plus élevée d'unités de données de protocole reçues sur une liaison sans fil particulière ; et
des informations d'unités de données de protocole non reçues jusqu'à présent, dans lequel les unités de données de protocole non reçues jusqu'à présent sont limitées à des unités de données de protocole dont les valeurs de comptage tombent dans une plage de valeurs de comptage déterminée à l'aide de règles préconfigurées, et
dans lequel, dans le rapport de commande de flux, une extrémité supérieure de la plage de valeurs de comptage est basée sur la valeur de comptage la plus élevée des unités de données de protocole reçues sur la liaison sans fil particulière ; et
des moyens pour communiquer le rapport de commande de flux d'un équipement utilisateur à une station de base.

2. Appareil selon la revendication 1, dans lequel, dans le rapport de commande de flux, une extrémité inférieure de la plage de valeurs de comptage est basée sur au moins une parmi une valeur de comptage d'une première unité de données de protocole manquante et une extrémité supérieure d'une plage de valeurs de comptage à laquelle était limité un rapport de commande de flux le plus récent envoyé précédemment.

3. Appareil selon la revendication 2, dans lequel une extrémité supérieure de la plage de valeurs de comptage couverte dans le rapport de commande de flux le plus récent envoyé précédemment est stockée sous forme d'une variable d'état de protocole de convergence de données par paquets.

4. Appareil selon l'une quelconque des revendications 1 à 3, dans lequel le déclenchement de la création du rapport de commande de flux est basé sur une augmentation d'au moins une parmi la valeur de comptage la plus élevée des unités de données de protocole reçues sur la liaison sans fil particulière, une valeur d'un premier segment manquant, et le nombre d'unités de données de protocole reçues sur la liaison sans fil particulière depuis un rapport de commande de flux le plus récent envoyé précédemment.

5. Appareil selon l'une quelconque des revendications 1 à 3, dans lequel le déclenchement de la création du rapport de commande de flux est basé sur une unité de données de service de protocole de convergence de données par paquets reçue délivrée aux couches supérieures lorsqu'aucune unité de données de service reçue ne reste pas stockée.

6. Appareil selon l'une quelconque des revendications 1 à 5, dans lequel la communication du rapport de commande de flux se fait après l'expiration d'un temporisateur d'interdiction d'état.

7. Procédé comprenant les étapes consistant à :
déclencher la création d'un rapport de commande de flux comprenant :
des informations d'une valeur de comptage la plus élevée d'unités de données de protocole reçues sur une liaison sans fil particulière ; et
des informations d'unités de données de protocole non reçues jusqu'à présent, dans lequel les unités de données de protocole non reçues jusqu'à présent sont limitées à des unités de données de protocole dont les valeurs de comptage tombent dans une plage de valeurs de comptage déterminée à l'aide de règles préconfigurées, et
dans lequel, dans le rapport de commande de flux, une extrémité supérieure de la plage de valeurs de comptage est basée sur la valeur de comptage la plus élevée des unités de données de protocole reçues sur la liaison sans fil particulière ; et
communiquer le rapport de commande de flux d'un équipement utilisateur à une station de base.

8. Procédé selon la revendication 7, dans lequel, dans le rapport de commande de flux, une extrémité inférieure de la plage de valeurs de comptage est basée sur au moins une parmi une valeur de comptage d'une première unité de données de protocole manquante et une extrémité supérieure d'une plage de valeurs de comptage à laquelle était limité un rapport de commande de flux le plus récent envoyé précédemment.

9. Procédé selon la revendication 8, dans lequel une extrémité supérieure de la plage de valeurs de comptage couverte dans le rapport de commande de flux le plus récent envoyé précédemment est stockée sous forme d'une variable d'état de protocole de convergence de données par paquets.

10. Procédé selon l'une quelconque des revendications 7 à 9, dans lequel le déclenchement de la création du rapport de commande de flux est basé sur une augmentation d'au moins une parmi la valeur de comptage la plus élevée des unités de données de protocole reçues sur la liaison sans fil particulière, une valeur d'un premier segment manquant, et le nombre d'unités de données de protocole reçues sur la liaison sans fil particulière depuis un rapport de commande de flux le plus récent envoyé précédemment.

11. Procédé selon l'une quelconque des revendications 7 à 9, dans lequel le déclenchement de la création du rapport de commande de flux est basé sur une unité de données de service de protocole de convergence de données par paquets reçue délivrée aux couches supérieures lorsqu'aucune unité de données de service reçue ne reste pas stockée.

12. Procédé selon l'une quelconque des revendications 7 à 11, dans lequel la communication du rapport de commande de flux se fait après l'expiration d'un temporisateur d'interdiction d'état.

13. Programme informatique comprenant des instructions pour amener un appareil à réaliser ce qui suit :
déclencher la création d'un rapport de commande de flux comprenant :
des informations d'une valeur de comptage la plus élevée d'unités de données de protocole reçues sur une liaison sans fil particulière ; et
des informations d'unités de données de protocole non reçues jusqu'à présent, dans lequel les unités de données de protocole non reçues jusqu'à présent sont limitées à des unités de données de protocole dont les valeurs de comptage tombent dans une plage de valeurs de comptage déterminée à l'aide de règles préconfigurées, et
dans lequel, dans le rapport de commande de flux, une extrémité supérieure de la plage de valeurs de comptage est basée sur la valeur de comptage la plus élevée des unités de données de protocole reçues sur la liaison sans fil particulière ; et
communiquer le rapport de commande de d'un équipement utilisateur à une station de base.

14. Programme informatique selon la revendication 13, comprenant en outre des instructions pour amener l'appareil à réaliser le procédé selon l'une quelconque des revendications 8 à 12.
